# EUROPEAN PATENT APPLICATION

(11) **EP 4 813 708 A1**
(43) Date of publication of application: **30.09.2026**
(21) Application number: 26166992.3
(22) Date of filing: 24.03.2026
(51) Int. Cl.: B60K 1/04, B60N 2/42

(54) **VEHICLE**

(30) Priority: 26.03.2025 JP 2025052559
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); FUJIWARA, Nobuyoshi, Toyota-shi, Aichi-ken, 471-8571 (JP); YONEZAWA, Shota, Toyota-shi, Aichi-ken, 471-8571 (JP); BABA, Ryusuke, Toyota-shi, Aichi, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A vehicle 10 includes a battery pack 13 arranged below a vehicle cabin, an external battery equipment 14 electrically connected to the battery pack 13, and a rear seat 12. The external battery equipment 14 is arranged above the battery pack 13 and below the rear seat 12 such that an entirety of the external battery equipment 14 overlaps with at least part of the battery pack 13 in plan view and at least part of the external battery equipment 14 overlaps with at least part of a seating face 12A of the rear seat 12 in plan view.

## Description

### BACKGROUND

### Technical Field

The present disclosure relates to a vehicle.

### Background Art

Japanese Patent Application Laid-Open (JP-A) No. 2013-23219 discloses a vehicle including a battery pack.

### SUMMARY OF INVENTION

### Technical Problem

There is a demand to suppress a submarining phenomenon even in vehicles including a battery pack. Note that a submarining phenomenon is a phenomenon in which the body of a passenger seated in a seat slips out from their seatbelt and falls off toward the front from their seat.

An object of the present disclosure is, in a vehicle including a battery pack, to suppress a submarining phenomenon, while also arranging the battery pack and external battery equipment connected thereto with good efficiency.

### Solution to Problem

In the present disclosure, unless explicitly stated otherwise, "front and rear", "up and down", "left and right" directions respectively mean front and rear in a vehicle front-rear direction, up and down in a vehicle height direction, and left and right in a vehicle width direction.

A vehicle according to a first aspect includes a battery pack arranged below a vehicle cabin, an external battery equipment electrically connected to the battery pack, and a rear seat. The external battery equipment is arranged above the battery pack and below the rear seat such that an entirety of the external battery equipment overlaps with at least part of the battery pack in plan view and at least part of the external battery equipment overlaps with at least part of a seating face of the rear seat in plan view.

In the present aspect, the vehicle includes a battery pack arranged below the vehicle cabin, the external battery equipment electrically connected to the battery pack, and the rear seat.

Preferably a submarining phenomenon is suppressed from occurring to a passenger seated on the rear seat.

Thus in the present aspect, the external battery equipment is arranged above the battery pack and below the rear seat such that the entirety of the external battery equipment overlaps with at least part of the battery pack in plan view and at least part of the external battery equipment overlaps with at least part of a seating face of the rear seat in plan view.

This thereby enables a space directly below the rear seat to be utilized efficiently for placement of the external battery equipment in cases in which the seating face is provided such that the front end side of the seating face of the rear seat is raised in order to suppress a submarining phenomenon.

Note that in exemplary embodiments described below the battery pack includes a battery case housing the battery and an equipment case provided as a separate body to the battery case and housing the internal battery equipment. However, the battery pack of the present aspect is not limited thereto.

Note that in exemplary embodiments described below the battery pack includes the battery and the internal battery equipment, and the internal battery equipment is arranged above the battery and below the rear seat. However, the battery pack of the present aspect is not limited thereto.

Note that in exemplary embodiments described below the rear seat is a second row seat, however, the present aspect is not limited thereto. The rear seat may, for example, be a third row seat.

Note that although in exemplary embodiments described below part of the battery pack overlaps with at least part of a seating face of a front seat in plan view, the present aspect is not limited to.

Note that although in exemplary embodiments described below the external battery equipment is a device including a function to convert alternating current power to direct current power, the external battery equipment of the present aspect is not limited thereto.

A vehicle according to a second aspect is the first aspect, wherein the external battery equipment is arranged such that at least part of the external battery equipment overlaps with at least part of a front section of the seating face in plan view.

In the present aspect the external battery equipment is arranged such that at least part thereof overlaps with at least part of the front section of the seating face in plan view.

This thereby enables space directly below a front end portion of the seating face to be utilized for efficient placement of the external battery equipment.

A vehicle according to a third aspect is the first or second aspect, wherein a front-rear direction position of a front face of the external battery equipment is positioned in a front-rear range of 100 mm or less centered on a front end of the seating face.

In the present aspect, the front-rear direction position of the front face of the external battery equipment is positioned in the front-rear range of 100 mm or less centered on the front end of the seating face.

This thereby enables the front-rear direction position of the front face of the external battery equipment to be set further forward than in embodiments in which the front-rear direction position of the front face of the external battery equipment is positioned further than 100 mm rearward from the front end of the seating face, enabling the space directly below the seating face to be utilized efficiently.

A vehicle according to a fourth aspect is the second or third aspect, wherein the external battery equipment is arranged so as not to overlap with a rear section of the seating face in plan view.

In the present aspect, the external battery equipment is arranged so as not to overlap with the rear section of the seating face in plan view.

This accordingly results in the external battery equipment not being arranged directly below the rear section of the seating face, thereby facilitating provision of the seating face such that the front end side of the seating face is raised.

A vehicle according to a fifth aspect is any of the first to fourth aspects, wherein the battery pack includes a battery, an internal battery equipment electrically connected to the battery, and a housing case housing the battery and the internal battery equipment. The housing case includes a battery case housing the battery, and an equipment case housing the internal battery equipment. The equipment case is arranged above the battery case such that at least part of the equipment case overlaps with at least part of the battery case in plan view. The external battery equipment is arranged above the equipment case such that at least part of the external battery equipment overlaps with at least part of the internal battery equipment in plan view.

In the present aspect the battery pack includes the battery, the internal battery equipment electrically connected to the battery, and the housing case housing the battery and the internal battery equipment. The housing case includes the battery case housing the battery, and the equipment case housing the internal battery equipment.

The equipment case is arranged above the battery case such that at least part thereof overlaps with at least part of the battery case in plan view, and the external battery equipment is arranged above the equipment case such that at least part thereof overlaps with at least part of the internal battery equipment in plan view.

This thereby enables the space directly below the internal battery equipment to be utilized for placement of the battery. A wider space can accordingly be secured as the space for installing the battery.

Note that in exemplary embodiments described below the front end of the battery case is positioned further forward than the front end of the equipment case. However, the battery case of the present aspect is not limited thereto.

A vehicle according to a sixth aspect is the fifth aspect, wherein a front end of the battery case is positioned further forward than a front end of the equipment case.

In the present aspect, the front end of the battery case is positioned further forward than the front end of the equipment case.

This thereby enables the battery case to be formed larger at the front side, enabling a wider space to be secured as the space for installing the battery.

A vehicle according to a seventh aspect is the fifth aspect or the sixth aspect, wherein the battery pack includes one or more information processing devices housed in the housing case, the one or more information processing devices are arranged above the internal battery equipment such that at least part of the one or more information processing devices overlaps with at least part of the internal battery equipment in plan view, and the one or more information processing devices is arranged so as not to overlap with the external battery equipment in plan view.

In the present aspect the battery pack includes the one or more information processing devices housed in the housing case. The one or more information processing devices are arranged above the internal battery equipment such that at least part thereof overlaps with at least part of the internal battery equipment in plan view. These one or more information processing devices are also arranged so as not to overlap with the external battery equipment in plan view.

This thereby enables each device to be arranged more efficiently that embodiments in which at least part of the one or more information processing devices overlaps with at least part of the external battery equipment in plan view.

A vehicle according to an eighth aspect is the seventh aspect, wherein the housing case includes an upper wall covering the internal battery equipment from above, the upper wall includes a first upper wall having at least part thereof that overlaps with at least part of the external battery equipment in plan view and not overlapping with the one or more information processing devices in plan view, and a second upper wall having at least part thereof that overlaps with at least part of the one or more information processing devices in plan view and not overlapping with the external battery equipment in plan view, and also the second upper wall is positioned further upward than the first upper wall.

In the present aspect, the housing case includes the upper wall covering the internal battery equipment from above. The upper wall includes a first upper wall having at least part thereof that overlaps with at least part of the external battery equipment in plan view and not overlapping with the one or more information processing devices in plan view, and a second upper wall having at least part thereof that overlaps with at least part of the one or more information processing devices in plan view and not overlapping with the external battery equipment in plan view. The second upper wall is positioned further upward than the first upper wall.

The internal space of the housing case is accordingly extended upward by a section corresponding to the second upper wall, enabling this extended section to be utilized for placement of the one or more information processing devices. Moreover, the height dimension of the space for placement of the external battery equipment is secured easily.

As described above, the present disclosure enables, in a vehicle including a battery pack, a submarining phenomenon to be suppressed, while also arranging the battery pack and external battery equipment connected thereto with good efficiency.

### BRIEF DESCRIPTION OF DRAWINGS

Exemplary embodiments of the present disclosure will be described in detail based on the following figures, wherein:
Fig. 1 is a schematic side view of a vehicle installed with a battery pack;
Fig. 2 is a schematic cross-section illustrating an enlargement of a vicinity of a rear end portion of a battery pack;
Fig. 3 is a plan view illustrating a battery case and a battery;
Fig. 4 is a plan view illustrating a battery pack and external battery equipment;
Fig. 5 is a schematic perspective view of a junction block;
Fig. 6 is a plan view illustrating a state in which internal battery equipment, plural information processing devices, and a charging bus bar are housed in an equipment case lower; and
Fig. 7 is a cross-section illustrating a vicinity of a rear end portion of a battery pack in more detail.

### DESCRIPTION OF EMBODIMENTS

Description follows regarding preferable exemplary embodiments of the present disclosure.

Note that as appropriate in the drawings, arrow FR indicates a vehicle forward direction, arrow UP indicates a vehicle upward direction, and arrow LH indicates a vehicle width direction left side. Moreover, when front and rear, up and down, and left and right directions are employed in the following description, unless explicitly stated otherwise, these respectively indicate front and rear in the vehicle front-rear direction, up and down in the vehicle height direction, and left and right in the vehicle width direction.

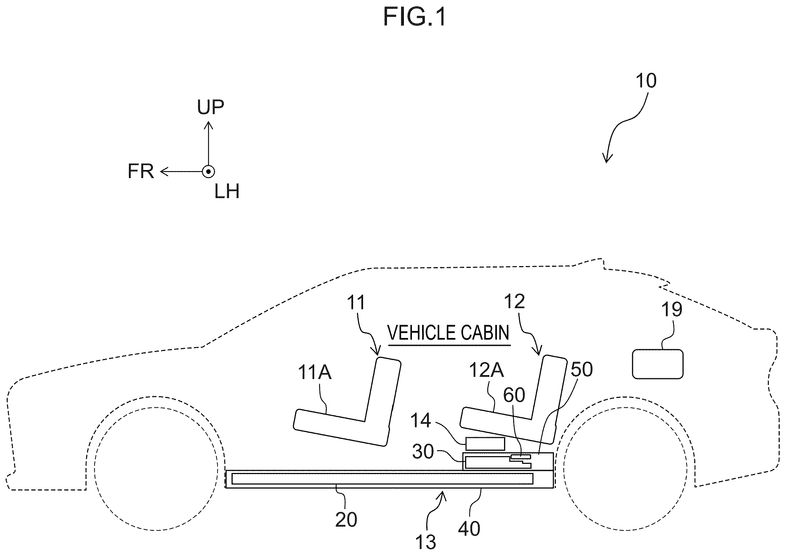

As illustrated in Fig. 1, vehicle 10 includes front seats 11 and rear seats 12 provided in a vehicle cabin. The front seats 11 are configured by a driver's seat and a front passenger seat. The rear seats 12 are, for example, a bench seat.

### Battery Pack 13

The vehicle 10 includes a battery pack 13 arranged below the vehicle cabin.

The battery pack 13 includes a battery 20, internal battery equipment 30 electrically connected to the battery 20 and plural information processing devices 60, and housing cases 40, 50 respectively housing these.

The housing cases 40, 50 include a battery case 40 housing the battery 20, and an equipment case 50 housing the internal battery equipment 30 and plural information processing devices 60A, 60B.

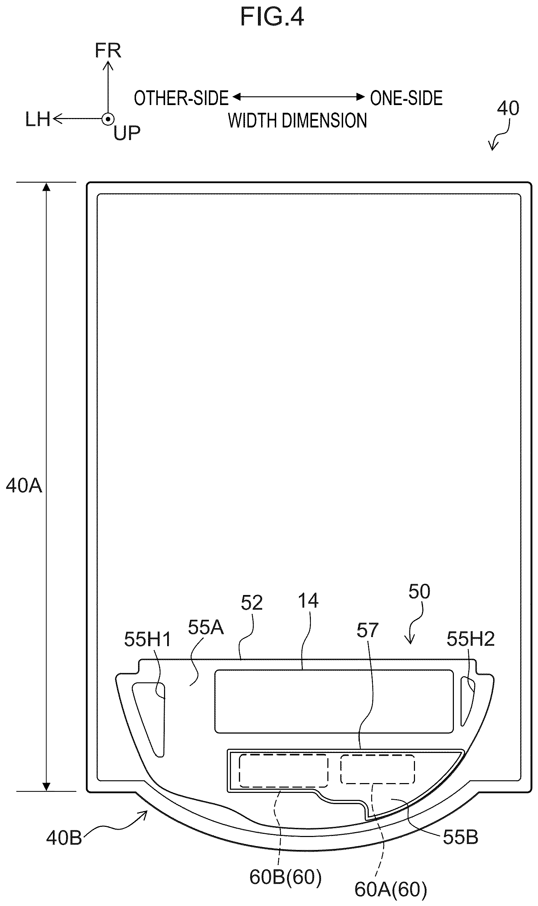

The equipment case 50 is arranged above the battery case 40 such that at least part of the equipment case 50 overlaps with at least part of the battery case 40 in plan view. Specifically, as illustrated in Fig. 4, the equipment case 50 is arranged above the battery case 40 such that the entire equipment case 50 overlaps with part of the battery case 40 in plan view.

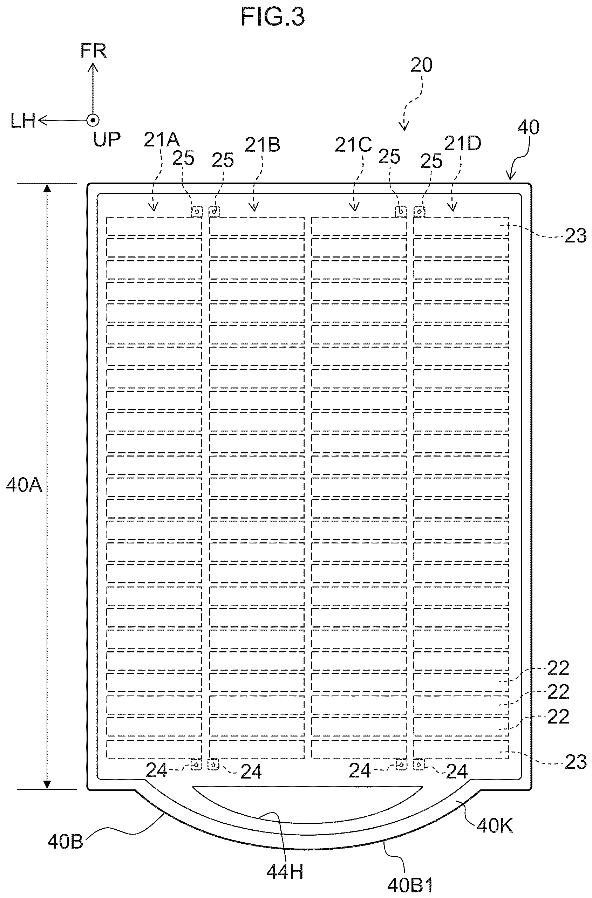

As illustrated in Fig. 3, the battery 20 is provided in a region extending in a front-rear direction (a rectangular region in plan view). As a result, as illustrated in Fig. 1, part of the battery 20 overlaps with at least part of seating faces 11A of the front seats 11 in plan view, and another part of the battery 20 overlaps with at least part of seating faces 12A of the rear seats 12 in plan view. Specifically, a front end of the battery 20 is positioned further forward than a front end of the seating faces 11A of the front seats 11. A rear end of the battery 20 is positioned further rearward than a front end of the seating faces 12A of the rear seats 12.

As illustrated in Fig. 3, the battery 20 includes plural battery modules 21A, 21B, 21C, 21D. The number of the battery modules 21 provided to the battery 20 is, for example, an even number, and is specifically four. Reference will simply be made to battery modules 21 when describing the plural battery modules 21A, 21B, 21C, 21D without particular discrimination therebetween.

The plural battery modules 21A, 21B, 21C, 21D are arranged alongside each other in the vehicle width direction.

The plural battery modules 21A, 21B, 21C, 21D are configured from a first battery module 21A, a second battery module 21B, a third battery module 21C, and a fourth battery module 21D.

Note that the battery 20 does not include a section where the battery modules 21 are arranged alongside each other in the height direction.

Each of the plural battery modules 21A, 21B, 21C, 21D includes plural battery cells 22 arranged alongside each other in the vehicle front-rear direction. The battery cells 22 are each a square cell, and each have a similar configuration to each other.

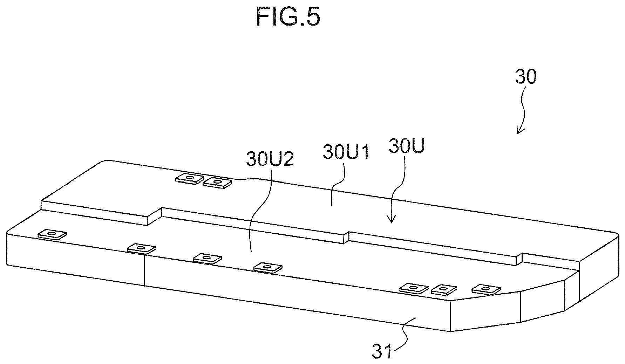

As illustrated in Fig. 5, the internal battery equipment 30 is a junction block 30. The internal battery equipment 30 includes a housing 31, and electric components (non-illustrated) such as bus bars, relays, fuses and the like housed in the housing 31. The relays include a system main relay. Although omitted in the drawings, the housing 31 includes a lower housing and an upper housing, and is configured in an upper/lower divided structure.

The internal battery equipment 30 is arranged above the battery 20 and below the rear seats 12 such that, in plan view, at least part thereof overlaps with at least part of the battery 20, and overlaps with at least part of the seating faces 12A of the rear seats 12. Specifically, the internal battery equipment 30 is arranged above the battery 20 and below the rear seats 12 such that part thereof overlaps with part of the battery 20 in plan view, and the entirety thereof overlaps with part of the seating face 12A of the rear seats 12 in plan view.

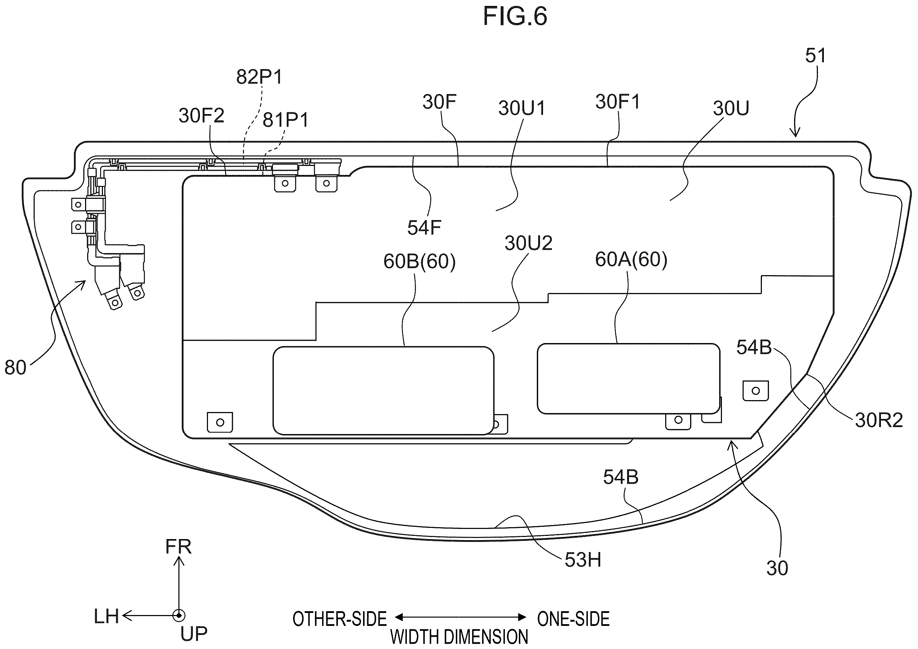

As illustrated in Fig. 6, the plural information processing devices 60A, 60B include a first information processing device 60A and a second information processing device 60B.

The first information processing device 60A is a battery ECU serving as a "control device".

The first information processing device 60A, for example, controls relays provided in the internal battery equipment 30.

The first information processing device 60A is arranged above the internal battery equipment 30 such that at least part thereof overlaps with at least part of the internal battery equipment 30 in plan view. Specifically, the first information processing device 60A is arranged above the internal battery equipment 30 such that the entirety thereof overlaps with at least part of the internal battery equipment 30 in plan view.

The second information processing device 60B receives voltage signals from plural voltage monitoring devices (omitted in the drawings), and transmits these to the first information processing device 60A after performing specific processing thereon. The voltage monitoring devices are devices to monitor the voltage of each portion of the battery 20, and configure a device also sometimes called a satellite battery module (SBM). Plural of the voltage monitoring devices are provided inside the battery case 40.

The second information processing device 60B is arranged above the internal battery equipment 30 such that at least part thereof overlaps with at least part of the internal battery equipment 30 in plan view. Specifically, the second information processing device 60B is arranged above the internal battery equipment 30 such that the entirety thereof overlaps with at least part of the internal battery equipment 30 in plan view.

The plural information processing devices 60 are arranged alongside each other in a vehicle width direction. Specifically, the first information processing device 60A is arranged at a vehicle width direction one-side of the second information processing device 60B such that at least part thereof overlaps with at least part of the second information processing device 60B in side view.

### External Battery Equipment 14

The vehicle 10 includes external battery equipment 14 that is arranged externally to the housing cases 40, 50, and is electrically connected to the battery pack 13.

The external battery equipment 14 is a device including a function as a so-called On-Board Charger (OBC). In other words, the external battery equipment 14 includes a function to transform externally supplied alternating current power into direct current power usable by the battery 20 of the vehicle 10. This function is exhibited when utilizing a domestic power source to charge the battery pack 13 with an appropriate voltage and current. The external battery equipment 14 also includes a DC-DC converter function.

The external battery equipment 14 is arranged above the battery pack 13 and below the rear seats 12 such that at least part thereof overlaps with at least part of the internal battery equipment 30 in plan view, and at least part thereof overlaps with at least part of the seating face 12A of the rear seats 12 in plan view. Specifically, the external battery equipment 14 is arranged above the battery pack 13 and below the rear seats 12 such that at least part thereof overlaps with at least part of the internal battery equipment 30 in plan view, and the entirety thereof overlaps with at least part of the seating face 12A of the rear seats 12 in plan view.

The external battery equipment 14 is arranged above the equipment case 50 such that at least part thereof overlaps with at least part of the equipment case 50 in plan view. Specifically, as illustrated in Fig. 4, the external battery equipment 14 is arranged above the equipment case 50 such that the entirety thereof overlaps with at least part of the equipment case 50 in plan view.

### External Equipment Cover 15

The vehicle 10 includes an external equipment cover 15.

The external equipment cover 15 covers the external battery equipment 14 from an upper side thereof. The external equipment cover 15 is arranged below the rear seats 12 and supports the rear seats 12. The external equipment cover 15 is, for example, formed by pressing a steel sheet material or the like.

The external equipment cover 15 includes an upper wall 15A covering the external battery equipment 14 from above, a front wall 15B covering the external battery equipment 14 from the front, and an inclined wall 15C extending diagonally rearward from the upper wall 15A.

### Detailed Description

Detailed description follows regarding some configuration elements.

### Battery 20

As illustrated in Fig. 3, the battery modules 21 contained in the battery 20 each include a front terminal 25 and a rear terminal 24.

The front terminal 25 of the first battery module 21A and the front terminal 25 of the second battery module 21B are connected together through a non-illustrated bus bar.

The front terminal 25 of the third battery module 21C and the front terminal 25 of the fourth battery module 21D are connected together through a non-illustrated bus bar.

The rear terminals 24 of the battery modules 21 are electrically connected to the internal battery equipment 30 though upper/lower connection bus bars 70.

The rear terminals 24 are positioned further rearward than the rearmost battery cell 22 from out of the plural battery cells 22 provided in each of the battery modules 21. Specifically, the rear terminals 24 are positioned further rearward than a rear end member 23, from out of a front-rear pair of end members 23 provided in the battery modules 21. Note that the front-rear pair of end members 23 are members for restraining the plural battery cells 22 in a state clamped from both front and rear directions. The end members 23 is, for example, an aluminum die-cast component.

### Battery Case 40

The battery case 40 is formed in a box shape. The battery case 40 is positioned so as to be entirely lower than a floor surface of a vehicle cabin.

As illustrated in Fig. 3, the battery case 40 includes a battery case main body 40A, and a battery case rearward extension 40B.

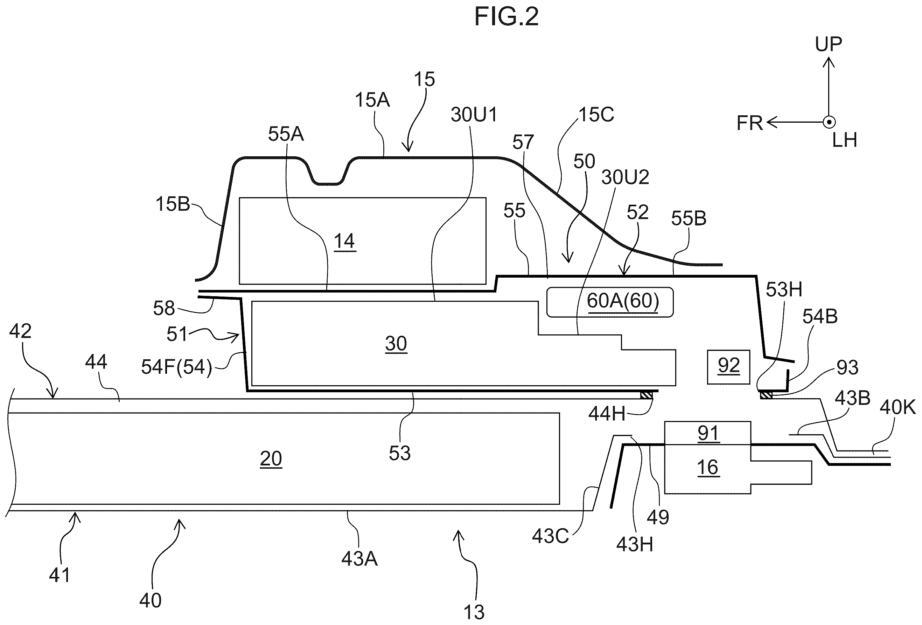

The battery case main body 40A is a section where the battery 20 is housed, and the battery case rearward extension 40B is a section where the battery 20 is not housed. The battery case rearward extension 40B is provided further rearward than the battery case main body 40A. The internal space of the battery case 40 is extended rearward due to the battery case rearward extension 40B being provided. As illustrated in Fig. 2, the space inside the battery case rearward extension 40B has a smaller height dimension than the space inside the battery case main body 40A.

The battery case main body 40A has a substantially rectangular profile in plan view. Specifically, the battery case main body 40A has a substantially rectangular profile in plan view, with a long edge along the front-rear direction and a short edge along the vehicle width direction.

The battery case rearward extension 40B has a shape in which a vehicle width dimension decreases on progression toward the rear side. This thereby enables the internal space of the battery case 40 to be extended while avoiding interference with configuration in the vicinity of the rear wheels of the vehicle 10.

A rear side edge 40B1 of the battery case rearward extension 40B is configured with a profile so as to have a convex bow shape toward the rear.

The vehicle width direction dimension at a front end of the battery case rearward extension 40B is smaller than a vehicle width direction dimension of the battery case main body 40A. Specifically, the vehicle width direction dimension at the front end of the battery case rearward extension 40B is in a range of from 60% to 90% of the vehicle width direction dimension of the battery case main body 40A.

The battery case 40 includes a battery case lower 41 and a battery case upper 42.

The battery case lower 41 includes a first lower wall 43A. The first lower wall 43A is provided to the battery case main body 40A. The first lower wall 43A has a shape extending in both the front-rear direction and the vehicle width direction, and is positioned directly below the battery 20.

The battery case lower 41 includes a second lower wall 43B. The second lower wall 43B is provided to the battery case rearward extension 40B. The second lower wall 43B is positioned further rearward than the first lower wall 43A. The second lower wall 43B is positioned further upward than the first lower wall 43A. The second lower wall 43B includes a connecter block hole 43H.

The battery case 40 includes a connecter block 49 attached to the battery case lower 41 so as to close up the connecter block hole 43H. The connecter block 49 is attached to the battery case lower 41 from below by fastenings or the like. The connecter block 49 is, for example, a die-cast component.

The battery case lower 41 includes a connection upright wall 43C to connect a rear end of the first lower wall 43A and a front end of the second lower wall 43B together. The connection upright wall 43C extends in a direction inclined rearward on progression upward.

The battery case upper 42 includes an upper wall 44. The upper wall 44 has a shape extending in both the front-rear direction and vehicle width direction, and covers the battery 20 from above.

The upper wall 44 functions as a floor panel configuring part of a floor of the vehicle cabin. This means that the vehicle 10 does not include another floor panel arranged above the upper wall 44.

The upper wall 44 includes an upper wall opening portion 44H piercing through the upper wall 44. The upper wall opening portion 44H is provided at a position corresponding to the battery case rearward extension 40B. At least part of the upper wall opening portion 44H overlaps with at least part of the connecter block hole 43H in plan view.

The section of the upper wall 44 where the upper wall opening portion 44H is provided is positioned at the same height in the height direction as the section of the upper wall 44 overlapping with the battery 20 in plan view.

The battery case 40 includes a flange 40K formed where part of the battery case lower 41 and part of the battery case upper 42 are joined together. The flange 40K has a thickness direction oriented in the height direction. The flange 40K is provided contiguously without interruption around the entire periphery of the outer edge of the battery case 40 in plan view of the battery case 40. The flange 40K is positioned higher than the first lower wall 43A and lower than the upper wall 44. The flange 40K is positioned lower than the second lower wall 43B.

### Equipment Case 50

The entire equipment case 50 overlaps with a rear side part of the battery case 40. The section of the battery case 40 that overlaps with the equipment case 50 in plan view includes part of the battery case main body 40A and part of the battery case rearward extension 40B. The flange 40K formed around the entire periphery of the outer edge of the battery case 40 does not overlap with the equipment case 50 in plan view.

In plan view, a front-side edge of the equipment case 50 extends in a straight line shape parallel to the vehicle width direction, and a rear-side edge of the equipment case 50 is curved in a bow shape convex toward the rear side. This accordingly means that, when viewed from above, the shape of the equipment case 50 is a substantially semi-circular shape.

The equipment case 50 includes an equipment case lower 51 and an equipment case upper 52.

The equipment case lower 51 and the equipment case upper 52 are both die-cast products, specifically aluminum die-cast products.

The equipment case lower 51 is a casing having a substantially box shape open at an upper side thereof. A space is formed inside the equipment case 50 by attaching the equipment case upper 52 to the equipment case lower 51 from above.

A sealing member (omitted in the drawings) is arranged between the equipment case lower 51 and the equipment case upper 52. The equipment case 50 is accordingly configured with a structure that maintains waterproofing properties of the interior thereof.

The equipment case lower 51 includes a lower wall 53 and side walls 54.

The lower wall 53 includes a lower wall opening portion 53H that is a hole piercing through the lower wall 53. The lower wall opening portion 53H is provided such that at least part thereof overlaps with at least part of the upper wall opening portion 44H of the battery case upper 42 in plan view. Electrical connection between components inside the battery case 40, such as the battery 20 and the like, and components inside the equipment case 50, such as the internal battery equipment 30 and the like, is realized through the upper wall opening portion 44H of the battery case upper 42 and the lower wall opening portion 53H of the equipment case lower 51.

A peripheral edge portion of the upper wall opening portion 44H of the battery case upper 42, and a peripheral edge portion of the lower wall opening portion 53H of the equipment case lower 51, oppose each other in the height direction in a state clamping a sealing member 93 therebetween. The sealing member 93 is provided so as to surround the upper wall opening portion 44H and the lower wall opening portion 53H.

The lower wall 53 has a thickness direction oriented in the height direction, and extends in both the front-rear direction and the vehicle width direction. The lower wall 53 retains the internal battery equipment 30 through plural bosses (omitted in the drawings) provided to the lower wall 53, and fastenings members (omitted in the drawings).

The side walls 54 include a front wall 54F. The front wall 54F extends in a straight line shape parallel to the vehicle width direction. The front wall 54F is provided such that part thereof overlaps with the entire internal battery equipment 30 when viewed from the front. The front wall 54F extends in a direction inclined forward on progression upward.

The side walls 54 include a rear wall 54B. The rear wall 54B extends in a substantially circular arc shape convex on the rear side in plan view.

The equipment case upper 52 includes an upper wall 55. The upper wall 55 covers the internal battery equipment 30 from above.

The equipment case upper 52 includes an upper bulge portion 57 bulging upward. The internal space of the equipment case 50 is extended upward at a position directly below the upper bulge portion 57 due to forming the upper bulge portion 57. The upper bulge portion 57 is provided at a position on the rear side of the equipment case upper 52.

The upper wall 55 includes a first upper wall 55A and a second upper wall 55B.

At least part of the first upper wall 55A overlaps with at least part of the external battery equipment 14 in plan view and does not overlap with the one or more information processing devices 60 in plan view. Specifically, part of the first upper wall 55A overlaps with the entire external battery equipment 14 in plan view and does not overlap with the plural information processing devices 60 in plan view.

At least part of the second upper wall 55B overlaps with at least part of the one or more information processing devices 60 in plan view, and does not overlap with the external battery equipment 14 in plan view. Specifically, part of the second upper wall 55B overlaps with the entirety of the plural information processing devices 60 in plan view and does not overlap with the external battery equipment 14 in plan view.

The plate thickness direction of the first upper wall 55A is oriented in the height direction.

The second upper wall 55B is positioned further upward than the first upper wall 55A. The second upper wall 55B is provided to the upper bulge portion 57. The plate thickness direction of the second upper wall 55B is oriented in the height direction.

The equipment case upper 52 includes a charging opening portion 55H1 through which wiring for charging passes. The charging opening portion 55H1 is a hole piecing through the equipment case upper 52 in the height direction. The charging opening portion 55H1 is in a state closed off by a non-illustrated connecter block, charging connecter, or the like. The charging opening portion 55H1 is provided at a position further to a vehicle width direction other-side than the center of the equipment case upper 52, specifically in a vicinity of an end portion on the vehicle width direction other-side of the equipment case upper 52.

The equipment case upper 52 includes a communication opening portion 55H2 through which communication wiring passes. The communication wiring is, for example, wiring to electrically connect between the first information processing device 60A (battery ECU) inside the equipment case 50, and a vehicle body side ECU (omitted in the drawings) provided outside the battery pack 13. The communication opening portion 55H2 is a hole piecing through the equipment case upper 52 in the height direction. The communication opening portion 55H2 is in a state closed off by a non-illustrated connecter block, communication connecter, or the like. The communication opening portion 55H2 is provided at a position further to the vehicle width direction one-side than the center of the equipment case upper 52, specifically in a vicinity of an end portion on the vehicle width direction one-side of the equipment case upper 52.

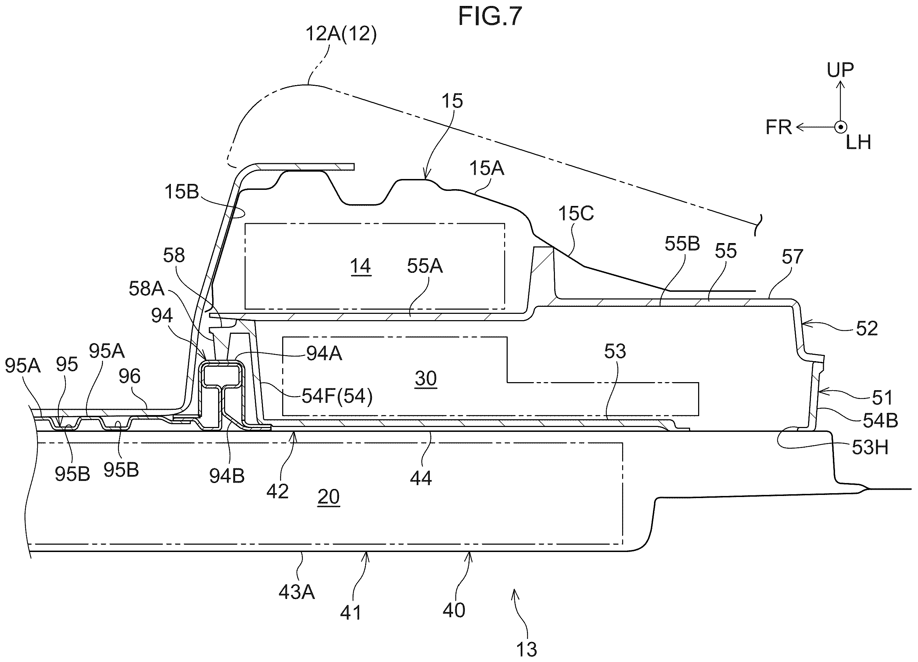

As illustrated in Fig. 7, the battery pack 13 includes a cross member 94 provided above the battery case 40 so as to extend in the vehicle width direction. Plural of the cross members 94 are provided in front of the equipment case 50. The cross member 94 illustrated in Fig. 7 is one thereof. Reference in the following to a cross member 94 refers to this cross member 94.

The equipment case lower 51 includes a front flange 58 extending forward from the front wall 54F. The front flange 58 is fixed to the cross member 94 in a state mounted to the cross member 94.

Plural downward projecting bosses 58A are provided to the front flange 58. The plural bosses 58A are arranged spaced apart from each other in the vehicle width direction, with lower ends of the bosses 58A arranged so as to oppose the upper face of the cross member 94.

The cross member 94 includes a first member 94A formed with a downwardly open hat shaped cross-section in side-view cross-section, and a second member 94B joined to the first member 94A in a state in which a large part thereof is arranged at the inside of the first member 94A. The second member 94B has a closed cross-section structure extending in the vehicle width direction.

A front end portion of the equipment case lower 51 is fixed to the cross member 94 by screwing non-illustrated bolts that have been inserted into the bosses 58A of the front flange 58 from above into non-illustrated nuts provided to the cross member 94.

Part of the cross member 94 is positioned between the battery case upper 42 and the equipment case lower 51. An air layer that extends in both the front-rear direction and the vehicle width direction is accordingly formed between the upper wall 44 of the battery case upper 42 and the lower wall 53 of the equipment case lower 51.

As illustrated in Fig. 7, the battery pack 13 includes a floor-forming member 95 configuring a floor of the vehicle. A rear end portion of the floor-forming member 95 is joined to the front end portion of the cross member 94. The floor-forming member 95 is arranged above the battery case 40 along the upper wall 44 of the battery case 40.

The floor-forming member 95 includes plural protrusion beads 95A that protrude upward and extend in the vehicle width direction, and plural indentation beads 95B that protrude downward and extend in the vehicle width direction. The plural protrusion beads 95A and the plural indentation beads 95B are arranged alternately to each other along the front-rear direction.

A floor carpet 96 is installed to the upper face of the battery case 40, with a rear end of the floor carpet 96 fixed in a state inserted between a front end portion of the seating face 12A of the rear seats 12 and the external equipment cover 15.

### Internal Battery Equipment 30

The internal battery equipment 30 is electrically connected to the battery 20 through non-illustrated bus bars.

The internal battery equipment 30 is arranged inside the equipment case 50 in a region shifted toward the vehicle width direction one-side. This means that from out of the space inside the equipment case 50, a space that overlaps with the internal battery equipment 30 in side view and that is a space further to the vehicle width direction other-side than the internal battery equipment 30 is a space wider than a space that overlaps with the internal battery equipment 30 in side view and that is a space further to the vehicle width direction one-side than the internal battery equipment 30. Charging wiring, such as a charging bus bar 80, is installed in the wider space.

The upper face 30U of the internal battery equipment 30 includes a first upper face 30U1 and a second upper face 30U2.

The second upper face 30U2 is provided further rearward than the first upper face 30U1. Specifically, the first upper face 30U1 is an upper face of a front section of the internal battery equipment 30, and the second upper face 30U2 is an upper face of a rear section of the internal battery equipment 30. The second upper face 30U2 is positioned lower than the first upper face 30U1. The internal battery equipment 30 is accordingly formed with a height of the rear section being lower than that of the front section.

The first upper face 30U1 does not overlap with the plural information processing devices 60 in plan view.

In plan view, at least part of the second upper face 30U2 overlaps with at least part of the plural information processing devices 60. Specifically, at least part of the second upper face 30U2 overlaps with at least part of the first information processing device 60A in plan view, and at least part of the second upper face 30U2 overlaps with at least part of the second information processing device 60B in plan view.

### Plural Information Processing Devices 60

The shape of each of the information processing devices 60 is a substantially cuboidal shape. The information processing devices 60 are each arranged with their thickness directions oriented in the height direction. The thickness direction means a direction of the shortest side in a cuboid. However, the information processing devices 60 may be arranged with their thickness directions oriented in directions slightly inclined with respect to the height direction.

Moreover, the information processing devices 60 are each arranged with their long side directions oriented in the vehicle width direction. Reference to the long side direction means a direction along the longer side of the two sides remaining in the three sides of a cuboid after the shortest side has been excluded.

### External Battery Equipment 14

The external battery equipment 14 is a substantially cuboidal shape. The external battery equipment 14 is arranged with its thickness direction oriented in the height direction. The external battery equipment 14 is arranged with a long side direction oriented in the vehicle width direction.

The vehicle width direction dimension of the external battery equipment 14 is larger than the vehicle width direction dimension of the first information processing device 60A, and is larger than the vehicle width direction dimension of the second information processing device 60B.

More specifically, the vehicle width direction dimension of the external battery equipment 14 is larger than a dimension resulting from adding the vehicle width direction dimension of the first information processing device 60A to the vehicle width direction dimension of the second information processing device 60B.

An end on the vehicle width direction one-side of the external battery equipment 14 is positioned further toward the vehicle width direction one-side than an end on the vehicle width direction one-side of the first information processing device 60A.

The vehicle width direction other-side end of the external battery equipment 14 is positioned further toward the vehicle width direction other-side than the vehicle width direction other-side end of the second information processing device 60B.

The external battery equipment 14 is arranged directly above the equipment case 50. Specifically, the external battery equipment 14 is arranged above the equipment case 50 such that the entirety of the external battery equipment 14 overlaps with part of the equipment case 50 in plan view.

Specifically, the external battery equipment 14 is arranged such that the entire external battery equipment 14 overlaps with part of the first upper wall 55A of the equipment case 50 in plan view. Namely, the external battery equipment 14 is arranged so as not to overlap with the upper bulge portion 57 of the equipment case upper 52 in plan view. The external battery equipment 14 is positioned forward of the upper bulge portion 57 in the front-rear direction.

The external battery equipment 14 is electrically connected to the battery pack 13 through a non-illustrated harness or the like. This electrical connection is performed through the charging opening portion 55H1 of the equipment case upper 52.

### Cable Connecter 16

The vehicle 10 includes the cable connecter 16 connected to the battery pack 13 for supplying power to each vehicle section. The cable connecter 16 is attached to a terminal of a cable (omitted in the drawings). Although not illustrated in the drawings, plural of the cable connecters 16 are arrayed along the vehicle width direction.

The cable connecter 16 is attached below a vehicle rear end portion of the battery pack 13. Specifically, the cable connecter 16 is attached, from below, to a section of the housing cases 40, 50 further rearward than the battery 20. Specifically, the cable connecter 16 is attached, from below, to a section of the battery case 40 corresponding to a connecter block 49.

A direction of connection of the cable connecter 16 to the battery pack 13 is the vehicle upward direction. Specifically, the battery pack 13 includes an internal connecter 91 connected to the cable connecter 16. The internal connecter 91 is fixed to the connecter block 49. The cable connecter 16 is connected to the internal connecter 91 of the battery pack 13 from below. Note that the internal connecter 91 is electrically connected to the internal battery equipment 30 through a non-illustrated bus bar, a power distribution unit 92, described later, and the like.

The cable connecter 16 is arranged so as not to project further downward than a lower face of the first lower wall 43A of the battery case 40.

### Power Distribution Unit 92

The battery pack 13 includes the power distribution unit 92 housed in the housing cases 40, 50. The power distribution unit 92 is connected to the internal battery equipment 30 through bus bars or the like, and is also connected to plural internal connecters 91 through bus bars or the like. This means that the power distribution unit 92 functions so as to distribute power using the plural provided cable connecters 16.

The power distribution unit 92 is arranged further rearward than the battery 20 and the internal battery equipment 30 so as not to overlap with the battery 20 and the internal battery equipment 30 in plan view.

The power distribution unit 92 is arranged further rearward than the internal battery equipment 30 such that at least part thereof overlaps with at least part of the internal battery equipment 30 when viewed from the front.

### Assembly to Vehicle Body Framework Task

The battery pack 13, the external battery equipment 14, and the external equipment cover 15 are integrated together as a single body prior to being assembled to the vehicle body framework. Then, in a state in which the battery pack 13, the external battery equipment 14, the external equipment cover 15, and the like have been integrated together as a single body, they are assembled, from below, to the vehicle body framework including a left-right pair of rockers (side sills).

### Operation and Advantageous Effects

Next, description follows regarding the operation and advantageous effects of the present exemplary embodiment.

In the present exemplary embodiment, as illustrated in Fig. 1, the vehicle 10 includes the battery pack 13 arranged below a vehicle cabin, the external battery equipment 14 electrically connected to the battery pack 13, and the rear seats 12.

Preferably a submarining phenomenon is suppressed from occurring to a passenger seated on the rear seats 12.

Thus in the present exemplary embodiment, as illustrated in Fig. 2 and Fig. 6, the external battery equipment 14 is arranged above the battery pack 13 and below the rear seats 12 such that the entirety thereof overlaps with part of the battery pack 13 in plan view, and at least part thereof overlaps with at least part of the seating face 12A of the rear seats 12 in plan view.

This thereby enables a space directly below the rear seats 12 to be utilized efficiently for placement of the external battery equipment 14 in cases in which the seating face 12A is provided such that the front end side of the seating face 12A of the rear seats 12 is raised so as to suppressed a submarining phenomenon.

Moreover, in the present exemplary embodiment, as illustrated in Fig. 7, the external battery equipment 14 is arranged such that at least part thereof overlaps with at least part of a front section of the seating face 12A in plan view.

This thereby enables a space directly below the front section of the seating face 12A to be utilized for efficient placement of the external battery equipment 14.

Moreover, in the present exemplary embodiment, as illustrated in Fig. 7, the front-rear direction position of the front face of the external battery equipment 14 is positioned within a front-rear range of 100 mm or less centered on the front end of the seating face 12A.

This thereby enables the space directly below the seating face 12A to be utilized more efficiently than embodiments in which the front-rear direction position of the front face of the external battery equipment 14 is positioned more than 100 mm rearward than the front end of the seating face 12A.

Moreover, in the present exemplary embodiment, as illustrated in Fig. 7, the external battery equipment 14 is arranged so as not to overlap with a rear section of the seating face 12A in plan view.

This means that the external battery equipment 14 is not arranged directly below the rear section of the seating face 12A, making it easy to provide the seating face 12A such that the front end side of the seating face 12A of the rear seats 12 is raised.

Moreover, in the present exemplary embodiment, as illustrated in Fig. 1 and Fig. 2, the battery pack 13 includes the battery 20, the internal battery equipment 30 electrically connected to the battery 20, and the housing cases 40, 50 for housing the battery 20 and the internal battery equipment 30. The housing cases 40, 50 include the battery case 40 for housing the battery 20, and the equipment case 50 for housing the internal battery equipment 30.

The equipment case 50 is arranged above the battery case 40 such that at least part of the equipment case 50 overlaps with at least part of the battery case 40 in plan view, and the external battery equipment 14 is arranged above the equipment case 50 such that at least part of the external battery equipment 14 overlaps with at least part of the internal battery equipment 30 in plan view.

This thereby enables a space directly below the internal battery equipment 30 to be utilized for placement of the battery 20. This thereby enables a wider space to be secured as the space for installing the battery 20.

Moreover, in the present exemplary embodiment, as illustrated in Fig. 1, the front end of the battery case 40 is positioned further forward than the front end of the equipment case 50.

This means that the battery case 40 is formed larger at the front side, thereby enabling a wider space to be secured as the space for installing the battery 20.

Moreover, in the present exemplary embodiment, as illustrated in Fig. 2, Fig. 6, and Fig. 9, the battery pack 13 includes the one or more information processing devices 60 housed in the housing cases 40, 50. The one or more information processing devices 60 are arranged above the internal battery equipment 30 such that at least part thereof overlaps with at least part of the internal battery equipment 30 in plan view. The one or more information processing devices 60 are also arranged so as not to overlap with the external battery equipment 14 in plan view.

This thereby enables more efficient placement of each device than embodiments in which at least part of the one or more information processing devices 60 overlaps with at least part of the external battery equipment 30 in plan view.

Moreover, in the present exemplary embodiment, as illustrated in Fig. 6, the one or more information processing devices 60 are arranged so as not to overlap with the external battery equipment 14 in plan view.

This thereby enables more efficient placement of each device than embodiments in which at least part of the one or more information processing devices 60 overlaps with at least part of the external battery equipment 14 in plan view.

Moreover, in the present exemplary embodiment, the housing cases 40, 50 include the upper wall 55 covering the internal battery equipment 30 from above. The upper wall 55 includes the first upper wall 55A having at least part thereof that overlaps with at least part of the external battery equipment 14 in plan view and not overlapping with the one or more information processing devices 60 in plan view, and includes the second upper wall 55B having at least part thereof that overlaps with at least part of the one or more information processing devices 60 in plan view and not overlapping with the external battery equipment 14 in plan view. The second upper wall 55B is positioned above the first upper wall 55A.

The space inside the housing cases 40, 50 is accordingly extended upward by the section corresponding to the second upper wall 55B, enabling this extended section to be utilized for placement of the one or more information processing devices 60. Moreover, a height dimension of the space for placement of the external battery equipment 14 is easily secured.

Moreover, in the present exemplary embodiment, as illustrated in Fig. 2, Fig. 5, and Fig. 6, the internal battery equipment 30 includes the first upper face 30U1 not overlapping with the one or more information processing devices 60 in plan view, and the second upper face 30U2 having at least part thereof overlapping with at least part of the one or more information processing devices 60 in plan view. The second upper face 30U2 is positioned lower than the first upper face 30U1.

A placement space for the information processing devices 60 inside the housing cases 40, 50 can accordingly be easily secured in the range needed for placement of the information processing devices 60.

Preferable exemplary embodiments of the present disclosure have been described above, however the present disclosure is not limited to the above description.

### Explanation of Reference Numerals

- 10: vehicle

- 12: rear seat
- 12A: seating face
- 13: battery pack
- 14: external battery equipment
- 20: battery
- 30: junction block (internal battery equipment)
- 40, 50: housing case
- 40: battery case
- 50: equipment case
- 55: upper wall
- 55A: first upper wall
- 55B: second upper wall
- 60A: first information processing device (information processing device)
- 60B: second information processing device (information processing device)

## Claims

1. A vehicle comprising:
a battery pack arranged below a vehicle cabin;
an external battery equipment electrically connected to the battery pack; and
a rear seat, wherein
the external battery equipment is arranged above the battery pack and below the rear seat such that an entirety of the external battery equipment overlaps with at least part of the battery pack in plan view and at least part of the external battery equipment overlaps with at least part of a seating face of the rear seat in plan view.

2. The vehicle of claim 1, wherein the external battery equipment is arranged such that at least part of the external battery equipment overlaps with at least part of a front section of the seating face in plan view.

3. The vehicle of claim 2, wherein a front-rear direction position of a front face of the external battery equipment is positioned in a front-rear range of 100 mm or less centered on a front end of the seating face.

4. The vehicle of claim 2, wherein the external battery equipment is arranged so as not to overlap with a rear section of the seating face in plan view.

5. The vehicle of claim 1, wherein:
the battery pack includes
a battery,
an internal battery equipment electrically connected to the battery, and
a housing case housing the battery and the internal battery equipment;
the housing case includes
a battery case housing the battery, and
an equipment case housing the internal battery equipment;
the equipment case is arranged above the battery case such that at least part of the equipment case overlaps with at least part of the battery case in plan view; and
the external battery equipment is arranged above the equipment case such that at least part of the external battery equipment overlaps with at least part of the internal battery equipment in plan view.

6. The vehicle of claim 5, wherein a front end of the battery case is positioned further forward than a front end of the equipment case.

7. The vehicle of claim 5, wherein:
the battery pack includes one or more information processing devices housed in the housing case;
the one or more information processing devices are arranged above the internal battery equipment such that at least part of the one or more information processing devices overlaps with at least part of the internal battery equipment in plan view; and
the one or more information processing devices is arranged so as not to overlap with the external battery equipment in plan view.

8. The vehicle of claim 7, wherein:
the housing case includes an upper wall covering the internal battery equipment from above;
the upper wall includes
a first upper wall having at least part thereof that overlaps with at least part of the external battery equipment in plan view and not overlapping with the one or more information processing devices in plan view, and
a second upper wall having at least part thereof that overlaps with at least part of the one or more information processing devices in plan view and not overlapping with the external battery equipment in plan view; and
the second upper wall is positioned further upward than the first upper wall.
